# EUROPÄISCHE PATENTSCHRIFT

(11) **EP 2 929 598 B1**
(45) Veröffentlichungstag und Bekanntmachung des Hinweises auf die Patenterteilung: **27.04.2016**
(21) Anmeldenummer: 13789714.6
(22) Anmeldetag: 14.11.2013
(51) Int. Cl.: B60K 1/00, H01R 13/502, H01R 13/631, H01R 13/6581, H01R 105/00, H01R 24/38, H02K 11/00

(54) **VERBINDUNGSVORRICHTUNG**
CONNECTING DEVICE
DISPOSITIF DE CONNEXION

(30) Priorität: 10.12.2012 DE 202012011808 U
(43) Veröffentlichungstag der Anmeldung: 14.10.2015
(73) Patentinhaber: Rosenberger Hochfrequenztechnik GmbH & Co. KG, 83413 Fridolfing (DE)
(72) Erfinder: NEUREITER, Franz Josef, 5120 Haigermoos (AT)
(74) Vertreter: Zeitler Volpert Kandlbinder Patent- und Rechtsanwälte Partnerschaft mbB
(86) Internationale Anmeldenummer: PCT/EP2013/003440
(87) Internationale Veröffentlichungsnummer: WO 2014/090365

(56) Entgegenhaltungen:
- US-A- 4 351 582
- US-A- 4 822 286
- US-A1- 2011 316 372
- US-A1- 2012 040 553

## Beschreibung

Die Erfindung betrifft eine Verbindungsvorrichtung zum elektrisch leitenden Verbinden von elektrischen Komponenten, beispielsweise von Komponenten einer elektrischen Antriebseinheit eines Kraftfahrzeugs.

Es ist bekannt, in (teil-)elektrifizierten Kraftfahrzeugen kompakte elektrische Antriebseinheiten zu integrieren, die zumindest einen elektrischen Antriebsmotor und ein direkt an diesen angeflanschtes Getriebe sowie eine Leistungselektronik umfassen. Eine solche Antriebseinheit ist beispielsweise aus der DE 10 2009 040 896 A1 bekannt. Dort ist die Leistungselektronik in unmittelbarer Nähe zu dem Antriebsmotor angeordnet, jedoch nicht direkt an diesem sondern vielmehr an einem Querträger des Fahrwerks des Kraftfahrzeugs fixiert. Eine elektrische Verbindung zwischen der Leistungselektronik und dem Antriebsmotor kann dann in bekannter Weise über Kabel erfolgen, wobei die mittels der Kabel zu überbrückende Distanz wegen der räumlichen Nähe von Antriebsmotor und Leistungselektronik sehr kurz ist. Ein Vorteil der elektrischen Verbindung von Leistungselektronik und Antriebsmotor mittels Kabeln ist, dass diese infolge ihrer Flexibilität Relativbewegungen zwischen diesen Komponenten, die infolge ihrer voneinander unabhängigen Fixierung an der Struktur des Kraftfahrzeugs auftreten, ausgleichen können. Nachteilig an einer solchen Art der elektrischen Verbindung ist jedoch insbesondere der erhöhte Montageaufwand.

Vorteilhaft wäre daher, die räumliche Nähe zwischen der Leistungselektronik und dem Antriebsmotor bei der Antriebseinheit gemäß der DE 10 2009 040 896 A1 auszunutzen, um diese beiden Komponenten direkt miteinander elektrisch zu verbinden, indem Kontaktelemente der Leistungselektronik dazugehörige Gegenkontaktelemente des Antriebsmotor direkt kontaktieren. Eine sich aufgrund der unabhängigen Befestigung der Komponenten an der Struktur des Kraftfahrzeugs ergebende Relativbewegung der Kontaktelemente könnte dadurch ausgeglichen werden, dass die zueinander gehörenden Kontaktelemente der beiden Komponenten aneinander gleiten können. Problematisch hierbei kann jedoch der durch das Gleiten erzeugte Verschleiß sein, der die Lebensdauer und insbesondere auch die Betriebssicherheit der elektrischen Verbindung negativ beeinflussen kann.

Eine Verbindungsvorrichtung mit den Merkmalen des Oberbegriffs des Anspruchs 1 ist aus der US 2012/040553 A1 bekannt. Dabei ist ein die beiden Aufnahmeteile verbindender Gehäuseteil als Faltenbalg ausgebildet.

Ausgehend von diesem Stand der Technik lag der Erfindung die Aufgabe zugrunde, eine vorteilhafte Möglichkeit zur elektrischen Verbindung von in räumlicher Nähe zueinander angeordneten, sich möglicherweise in Grenzen relativ zueinander bewegenden Komponenten, wie insbesondere einem Antriebsmotor und einer Leistungselektronik bei einer elektrischen Antriebseinheit für ein Kraftfahrzeug, wie sie aus der DE 10 2009 040 896 A1 bekannt ist, anzugeben.

Diese Aufgabe wird durch eine Verbindungsvorrichtung gemäß dem unabhängigen Anspruch 1 gelöst. Eine sich aus einer bevorzugten Verwendung einer solchen Verbindungsvorrichtung ergebende elektrische Antriebseinheit für ein Kraftfahrzeug ist Gegenstand des Anspruchs 10. Vorteilhafte Ausführungsformen der erfindungsgemäßen Verbindungsvorrichtung und der erfindungsgemäßen Antriebseinheit sind Gegenstand der jeweiligen abhängigen Ansprüche und ergeben sich aus der nachfolgenden Beschreibung der Erfindung. Eine erfindungsgemäße Verbindungsvorrichtung zum elektrisch leitenden Verbinden von elektrischen Komponenten umfasst zumindest - mindestens ein, vorzugsweise mehrere erste Kontaktelemente, das/die für einen Kontakt mit einem/mehreren entsprechenden Gegenkontaktelementen einer ersten der Komponenten vorgesehen ist/sind,
- mindestens ein, vorzugsweise mehrere zweite Kontaktelemente, das/die für einen Kontakt mit einem/mehreren entsprechenden Gegenkontaktelementen einer zweiten der Komponenten vorgesehen ist/sind,
- eine insbesondere der Anzahl der ersten bzw. zweiten Kontaktelemente entsprechende Anzahl von flexiblen Leitern, die jeweils ein erstes Kontaktelement mit einem zweiten Kontaktelement elektrisch leitend verbinden und
- ein (vorzugsweise weitgehend oder vollständig geschlossenes) Gehäuse, das den/die Leiter umgibt und in einem ersten Aufnahmeteil das/die erste(n) Kontaktelement(e) (vorzugsweise unbeweglich) aufnimmt und in einem zweiten Aufnahmeteil das/die zweite(n) Kontaktelement(e) (vorzugsweise unbeweglich) aufnimmt, wobei das Gehäuse derart ausgebildet ist, dass dieses eine Relativbewegung zwischen dem ersten Aufnahmeteil und dem zweiten Aufnahmeteil zulässt bzw. nicht verhindert.

Mittels der erfindungsgemäßen Verbindungsvorrichtung können in räumlicher Nähe zueinander angeordnete elektrische Komponenten elektrisch miteinander verbunden werden, wobei infolge der Flexibilität der Leiter in Verbindung mit der entsprechenden Ausgestaltung des den oder die Leiter umgebenden Gehäuses Relativbewegungen auch ohne gleitende Kontaktstellen aufgenommen werden können. Die erfindungsgemäße Verbindungsvorrichtung unterliegt somit keinem durch die Relativbewegungen begründeten erhöhten Verschleiß und kann somit über einen langen Zeitraum eine sichere elektrische Verbindung gewährleisten. Gegenüber dem aus dem Stand der Technik bekannten Verbinden von elektrischen Komponenten mittels einfachen Kabeln zeichnet sich die erfindungsgemäße Verbindungsvorrichtung durch ihre einfache Handhabung als Einheit mehrerer Übertragungswege aus.

In einer bevorzugten Ausgestaltung der erfindungsgemäßen Verbindungsvorrichtung kann vorgesehen sein, dass die Aufnahmeteile starr ausgebildet sind, wodurch sich eine unbewegliche Lage der Kontaktelemente ergeben kann, die vorteilhaft für eine sichere Kontaktierung der dazugehörigen Gegenkontaktelemente sein kann.

Die eine Relativbewegung zulassende Eigenschaft des Gehäuses wird dadurch erreicht, dass ein die Aufnahmeteile verbindender Gehäuseteil flexibel ausgebildet ist. Dieser kann sich somit deformieren, wodurch die Relativbewegungen der durch die Verbindungsvorrichtung elektrisch verbundenen Komponenten aufgenommen werden können.

Die Flexibilität des die Aufnahmeteile verbindenden Gehäuseteils ergibt sich aus einer entsprechenden Flexibilität und Elastizität des für dieses Gehäuseteil verwendeten Werkstoffs (auch mehrere Werkstoffe).

Hierzu ist das Gehäuseteil r erfindungsgemäß aus einem Elastomer (z.B. auf Basis von Naturkautschuk oder Silikonkautschuk) ausgebildet. Zusätzlich besteht aber auch die Möglichkeit, die Flexibilität des Gehäuseteils durch strukturelle Maßnahmen (z.B. integrierte Gelenke) zu erreichen.

Für eine sichere und dauerhafte Verbindung der Komponenten mittels der Verbindungsvorrichtung kann weiterhin vorgesehen sein, dass die Aufnahmeteile Verbindungsmittel (z.B. Bohrungen, Rast- oder Klemmstifte, Rasthaken, etc.) zur Fixierung der Verbindungsvorrichtung an den Komponenten aufweisen. Eine vorzugsweise vorgesehene, starre Ausbildung der Aufnahmeteile kann die Fixierung der Verbindungsvorrichtung an den Komponenten dabei noch verbessern.

Eine weiterhin bevorzugte Ausgestaltung der erfindungsgemäßen Verbindungsvorrichtung kann vorsehen, dass der/die Leiter in einem unbelasteten (d.h. in einem nicht durch Kräfte von den Komponenten belasteten) Ausgangszustand des Gehäuses bogenförmig (auch mehrfach gekrümmt, z.B. S-förmig) in dem Gehäuse verläuft/verlaufen. Dadurch kann sichergestellt werden, dass von dem/den Leiter(n) auch Relativbewegungen der Komponenten, die zu einem gegenüber dem Ausgangszustand vergrößerten Abstand der Kontaktelemente führen, von dem/den Leiter(n) ausgeglichen werden können, ohne dass diese(r) dazu gedehnt werden müsste(n).

Vorzugsweise kann vorgesehen sein, dass der/die Leiter in Form eines Massebands ausgebildet ist bzw. von Massebändern gebildet sind. Hierbei handelt es sich um flexible elektrische Leiter, insbesondere Rechteckleiter bzw. Leiterbänder, aus einem Drahtgeflecht (z.B. aus Kupferdraht). Derartige Leiter eignen sich insbesondere für die bevorzugte Verwendung der erfindungsgemäßen Verbindungsvorrichtung zur Übertragung von Hochstrom (insbesondere Stromstärken, die 100 A erreichen oder überschreiten können) zwischen den Komponenten, da diese trotz Hochstromeignung eine gute Flexibilität aufweisen können.

In einer weiterhin bevorzugten Ausgestaltung der erfindungsgemäßen Verbindungsvorrichtung bildet das Gehäuse eine Abschirmung aus, indem das Gehäuse zumindest teilweise elektrisch leitfähig ausgebildet ist. Hierzu kann das Gehäuse z.B. vollständig oder teilweise aus Metall ausgebildet sein. Ebenso kann eine metallische Beschichtung des Gehäuses oder zumindest eines Teils davon vorgesehen sein. Vorzugsweise ist vorgesehen, dass ein Werkstoff des Gehäuses metallische Partikel umfasst, wodurch die abschirmende Wirkung erzeugt wird. Dies ist besonders bevorzugt dann umsetzbar, wenn das Gehäuse zumindest teilweise aus einem oder mehreren Elastomeren ausgebildet ist, die dann die metallischen Partikel umfassen können.

Um eine einfach handhabbare und gleichzeitig sichere Kontaktierung der Kontaktelemente der erfindungsgemäßen Verbindungsvorrichtung mit den Gegenkontaktelementen der Komponenten zu erreichen, kann weiterhin vorgesehen sein, dass die Kontaktelemente in Form von Steckkontaktelementen ausgebildet sind, die mit den Gegensteckkontaktelementen Steckverbindungen ausbilden. Dabei kann besonders bevorzugt vorgesehen sein, dass die Steckkontaktelemente der erfindungsgemäßen Verbindungsvorrichtung stiftförmig ausgebildet sind, die in komplementäre buchsenförmige Gegensteckkontaktelemente der Komponenten einsteckbar sind. Dies ermöglicht u.a., die Gegensteckkontaktelemente versenkt in die Komponenten zu integrieren, wodurch ein Berührschutz für die potentiell unter Hochspannung stehenden Gegensteckkontaktelemente erreicht werden kann.

Eine vorteilhafte Verwendung einer erfindungsgemäßen Verbindungsvorrichtung kann darin liegen, in einer elektrischen (Fahr-)Antriebseinheit für ein Kraftfahrzeug mindestens zwei Komponenten elektrisch leitend zu verbinden. Dies gilt insbesondere, wenn diese Komponenten in räumlicher Nähe zueinander angeordnet sind und/oder derart in das Kraftfahrzeug integriert sind, dass sich im Betrieb des Kraftfahrzeugs eine begrenzte Relativbeweglichkeit zwischen diesen ergeben kann.

Insbesondere kann eine Leistungselektronik mittels der Verbindungsvorrichtung mit einem mit Hochspannung betriebenen elektrischen Antriebsmotor (d.h. dieser dient zum elektrischen Fahrantrieb des Kraftfahrzeugs) verbunden sein. Eine solche Leistungselektronik umfasst zumindest einen Wechselrichter, der eine Gleichspannung, die beispielsweise von einer Traktionsbatterie des Kraftfahrzeugs zur Verfügung gestellt wird, in eine Wechselspannung und insbesondere eine Dreiphasenwechselspannung für den Antriebsmotor umwandelt.

Unter "Hochspannung" wird erfindungsgemäß eine elektrische Spannung von mindestens 30 V bei Wechselspannung und mindestens 60 V bei Gleichspannung verstanden.

Die Erfindung wird nachfolgend anhand eines in den Zeichnungen dargestellten Ausführungsbeispiels näher erläutert. In den Zeichnungen zeigt:

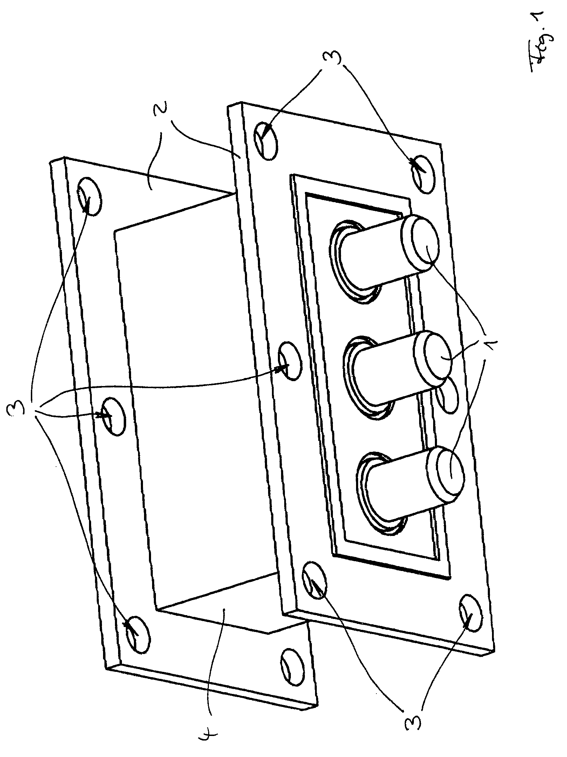

- Fig. 1:: eine erfindungsgemäße Verbindungsvorrichtung in einer perspektivischen Ansicht;

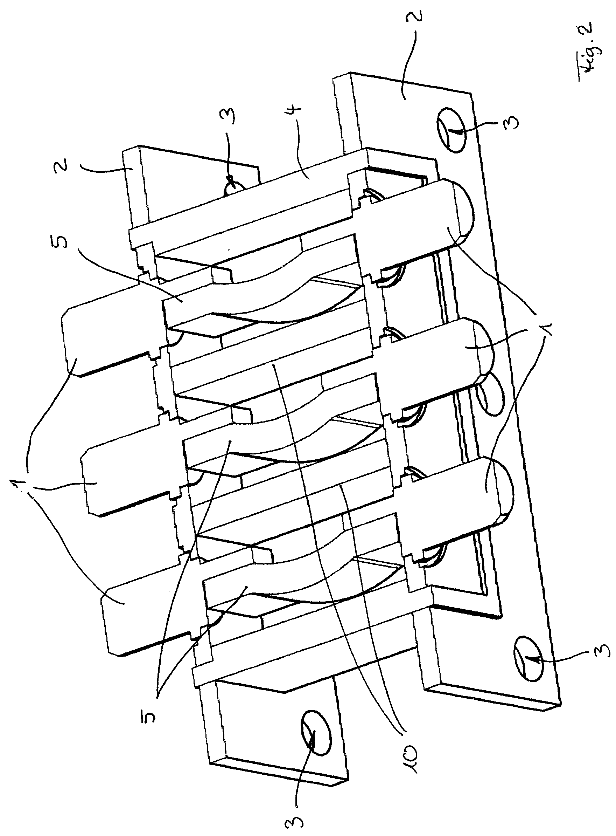

- Fig. 2:: die Verbindungsvorrichtung gemäß Fig. 1 in einem perspektivischen Querschnitt;
- Fig. 3:: eine erfindungsgemäße Antriebseinheit mit zwei mittels der Verbindungsvorrichtung gemäß Fig. 1 und 2 elektrisch leitend verbundenen Komponenten in einer perspektivischen Ansicht; und
- Fig. 4:: die Antriebseinheit gemäß Fig. 3 in einem perspektivischen Querschnitt.

Die in den Zeichnungen dargestellte Ausführungsform einer erfindungsgemäßen Verbindungsvorrichtung umfasst zwei Gruppen von jeweils drei stiftförmigen, metallischen (Steck-)Kontaktelementen 1. Die Kontaktelemente 1 jeder Gruppe sind unbeweglich in jeweils einem Aufnahmeteil 2 eines Gehäuses angeordnet. Die Aufnahmeteile 2 weisen hierzu entsprechende Durchgangsöffnungen auf, durch die sich die Kontaktelemente 1 erstrecken. Dabei ragen steckseitige Enden der Kontaktelemente 1 aus dem Gehäuse heraus, während ihre leiterseitige Enden in das Gehäuse hinein ragen. Eine Verbindung der Kontaktelemente 1 mit den Aufnahmeteilen 2 kann z.B. kraftschlüssig, formschlüssig und/oder stoffschlüssig (z.B. durch Verkleben) erfolgen.

Die eine rechteckige Form aufweisenden Aufnahmeteile 2 sind aus einem weitgehend starren Werkstoff (z.B. Kunststoff) ausgebildet und weisen Befestigungsöffnungen 3 auf, durch die Befestigungsmittel (z.B. Rast- oder Gewindebolzen) hindurchgesteckt werden können, um die Verbindungsvorrichtung an den Komponenten, zu deren elektrischer Verbindung diese vorgesehen ist, zu fixieren.

Das Gehäuse umfasst weiterhin einen die Aufnahmeteile 2 verbindenden Gehäuseteil 4, der aus einem Elastomer ausgebildet ist und daher eine vergleichsweise hohe Flexibilität (insbesondere auch Elastizität) aufweist. Dadurch können sich die zwei Aufnahmeteile 2 in Grenzen in beliebiger Richtung relativ zueinander bewegen.

Jeweils zwei sich in dem Gehäuse gegenüberliegende Kontaktelemente 1 sind mittels eines Leiters 5 in Form eines Massebands verbunden. Dabei kann eine Verbindung zwischen den leiterseitigen Enden der Kontaktelemente 1 und den Leitern 5 beispielsweise durch Löten vorgesehen sein. Die Ausgestaltung der Leiter 5 als Massebänder ermöglicht, trotz ihrer durch die relativ großen Querschnitte bedingten Eignung zur Übertragung von Hochstrom, eine vergleichsweise hohe Flexibilität, so dass auch diese eine Relativbeweglichkeit der Aufnahmeteile 2 zueinander nicht verhindern. Die Leiter sind mit einem elektrisch isolierenden Mantel umgeben.

Die Leiter 5 weisen bereits im Ausgangszustand der Verbindungsvorrichtung, d.h. in der Form, die das Gehäuse infolge der Eigenstabilität im von außen unbelasteten Zustand einnimmt, einen bogenförmigen Verlauf auf. Dadurch wird ermöglicht, dass auch Relativbewegungen der beiden Aufnahmeteile 2, die zu einer Vergrößerung des Abstands zwischen diesen führen, von den Leitern 5 aufgenommen werden können, ohne dass diese gedehnt werden müssen. Bei dem Gehäuse wird dagegen der die Aufnahmeteile 2 verbindende Gehäuseteil 4 gedehnt. Führt eine Relativbewegung dagegen zu einer Verringerung des Abstands zwischen den Aufnahmeteilen 2, wird dies von den Leitern 5 durch eine Verringerung des Krümmungsradius ihres bogenförmigen Verlaufs ausgeglichen. Der Gehäuseteil 4 wird dabei gestaucht oder anders deformiert (ausgebeult oder geknickt).

In dem Elastomer des die Aufnahmeteile verbindenden Gehäuseteils 4 sind eine Vielzahl von elektrischen Partikeln (nicht dargestellt) verteilt angeordnet. Diese bilden eine Abschirmung für die innerhalb des Gehäuses angeordneten Leiter 5 aus und verringern dadurch die Ein- und/oder Abstrahlung elektrischer oder magnetischer Felder. Die Abschirmungswirkung wird weiter dadurch verbessert, dass der Gehäuseteil 4 neben einem die Leiter 5 umgebenden Abschnitt auch zwei Trennwände 10 umfasst, die die äußeren der drei Leiter 5 jeweils von dem mittleren Leiter 5 räumlich abtrennen.

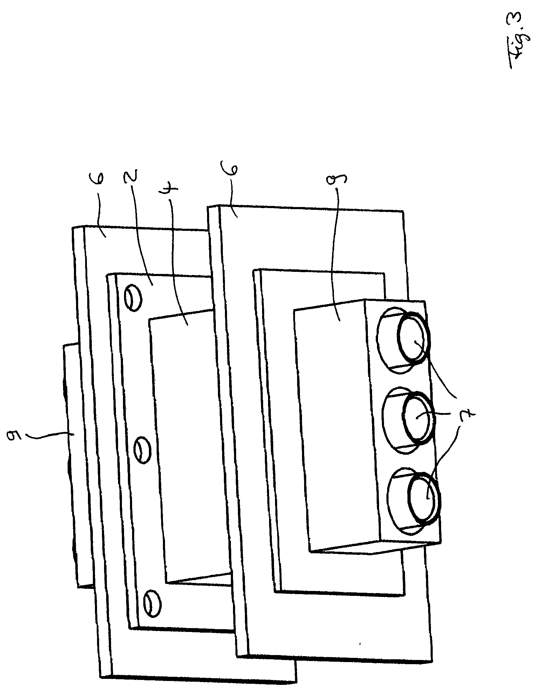

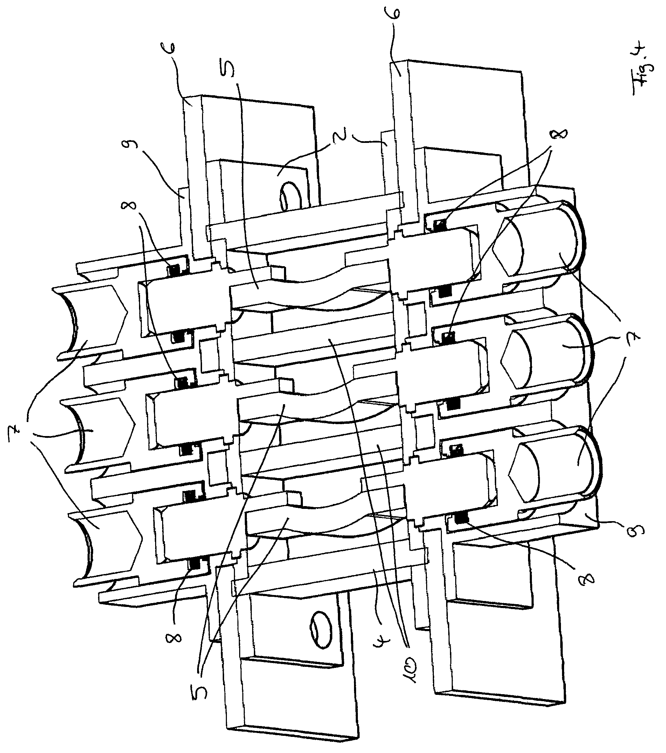

In den Fig. 3 und 4 ist dargestellt, wie zwei elektrische Komponenten einer erfindungsgemäßen Antriebseinheit für ein Kraftfahrzeug mittels der Verbindungsvorrichtung elektrisch leitend verbunden sind.

Von den Komponenten sind jeweils lediglich ein Teil eines Gehäuses 6 sowie ein Steckverbinderteil dargestellt. Jedes dieser Steckverbinderteile umfasst drei, an ihren steckseitigen Enden buchsenförmig ausgebildete (Gegen-)Kontaktelemente 7, in die die steckseitigen Enden der dazugehörigen stiftförmigen Kontaktelemente 1 der Verbindungsvorrichtung eingesteckt sind. Dabei sorgt jeweils eine radial aufgeweitete, ringförmige Schraubenfeder 8, die in einer umlaufenden Nut in dem steckseitigen Ende des jeweiligen Gegenkontaktelements 7 angeordnet ist, für eine sichere elektrische Kontaktierung.

Die leiterseitigen Enden der Gegenkontaktelemente 7 weisen jeweils eine sacklochartige Öffnung zur Aufnahme und Fixierung (z.B. durch Löten) eines abisolierten Endes eines Kabelleiters (nicht dargestellt) auf.

Die Gegenkontaktelemente 7 sind in einem Gehäuse 9 des jeweiligen Steckverbinderteils fixiert. Die Gehäuse 9 der Steckverbinderteile sind wiederum an den Gehäusen 6 der dazugehörigen Komponenten befestigt. Mittels der Befestigungsöffnungen 3 in den Aufnahmeteilen 2 der Verbindungsvorrichtung und entsprechenden Befestigungsmittel (nicht dargestellt) kann (zusätzlich zu der durch die Steckverbindungen bewirkten mechanischen Verbindung) eine mechanische Verbindung zwischen den Komponenten und dem jeweiligen Aufnahmeteil 2 der Verbindungsvorrichtung erreicht werden.

Trotz der weitgehend unbeweglichen Verbindung zwischen den Komponenten und der Verbindungsvorrichtung in den Bereichen der Kontaktstellen ermöglicht die flexible Ausgestaltung der Leiter 5 sowie des die Aufnahmeteile 2 verbindenden Gehäuseteils 4 eine Relativbeweglichkeit der beiden Komponenten zueinander.

Die Relativbeweglichkeit zwischen den Komponenten, die beispielsweise bis zu 1 cm betragen kann, kann sich z.B. daraus ergeben, dass diese nicht aneinander befestigt sondern unabhängig voneinander an die Struktur des Kraftfahrzeugs angebunden sind.

Bei den Komponenten kann es sich beispielsweise um eine Leistungselektronik sowie einen elektrischen Antriebsmotor für ein Kraftfahrzeug handeln. Von der Leistungselektronik wird dem Antriebsmotor elektrische Energie in Form von Dreiphasenwechselstrom bereitgestellt. Dementsprechend bildet die Verbindungsvorrichtung auch drei Übertragungswege aus.

## Patentansprüche

1. Verbindungsvorrichtung zum elektrisch leitenden Verbinden von elektrischen Komponenten, mit
- einem ersten Kontaktelement (1), das für einen Kontakt mit einem entsprechenden Gegenkontaktelement (7) einer ersten der Komponenten vorgesehen ist,
- einem zweiten Kontaktelement (1), das für einen Kontakt mit einem entsprechenden Gegenkontaktelement (7) einer zweiten der Komponenten vorgesehen ist,
- einem flexiblen Leiter (5), der das erste Kontaktelement (1) mit dem zweiten Kontaktelement (1) elektrisch leitend verbindet und
- einem Gehäuse, das den Leiter (5) umgibt und in einem ersten Aufnahmeteil (2) das erste Kontaktelement (1) aufnimmt und in einem zweiten Aufnahmeteil (2) das zweite Kontaktelement (1) aufnimmt, wobei das Gehäuse derart ausgebildet ist, dass dieses eine Relativbewegung zwischen dem ersten Aufnahmeteil (2) und dem zweiten Aufnahmeteil (2) zulässt, **dadurch gekennzeichnet, dass** ein die Aufnahmeteile (2) verbindender Gehäuseteil (4) aus einem Elastomer ausgebildet und flexibel ist.

2. Verbindungsvorrichtung gemäß Anspruch 1, **dadurch gekennzeichnet, dass** die Aufnahmeteile (2) starr ausgebildet sind.

3. Verbindungsvorrichtung gemäß einem der vorhergehenden Ansprüche, **dadurch gekennzeichnet, dass** die Aufnahmeteile (2) Verbindungsmittel zur Fixierung der Verbindungsvorrichtung an den Komponenten aufweisen.

4. Verbindungsvorrichtung gemäß einem der vorhergehenden Ansprüche, **dadurch gekennzeichnet, dass** der Leiter (5) in einem unbelasteten Ausgangszustand des Gehäuses bogenförmig in dem Gehäuse verläuft.

5. Verbindungsvorrichtung gemäß einem der vorhergehenden Ansprüche, **dadurch gekennzeichnet, dass** der Leiter (5) in Form eines Massebands ausgebildet ist.

6. Verbindungsvorrichtung gemäß einem der vorhergehenden Ansprüche, **dadurch gekennzeichnet, dass** das Gehäuse eine Abschirmung ausbildet.

7. Verbindungsvorrichtung gemäß Anspruch 6, **dadurch gekennzeichnet, dass** ein Werkstoff des Gehäuses metallische Partikel umfasst.

8. Verbindungsvorrichtung gemäß einem der vorhergehenden Ansprüche, **dadurch gekennzeichnet, dass** das Elastomer metallische Partikel umfasst.

9. Verbindungsvorrichtung gemäß einem der vorhergehenden Ansprüche, **dadurch gekennzeichnet, dass** die Kontaktelemente (1) in Form von Steckkontaktelementen ausgebildet sind.

10. Elektrische Antriebseinheit für ein Kraftfahrzeug mit mindestens zwei, mittels einer Verbindungsvorrichtung gemäß einem der vorhergehenden Ansprüche elektrisch leitend verbundenen Komponenten.

11. Elektrische Antriebseinheit gemäß Anspruch 10, **dadurch gekennzeichnet, dass** eine Leistungselektronik mittels der Verbindungsvorrichtung mit einem mit Hochspannung betriebenen elektrischen Antriebsmotor verbunden ist.

## Claims

1. Connection device for the electrically conductive connection of electrical components, having
- a first contact element (1), which is intended to make contact with a corresponding mating contact element (7) of a first of the components,
- a second contact element (1), which is intended to make contact with a corresponding mating contact element (7) of a second of the components,
- a flexible conductor (5) which connects the first contact element (1) with the second contact element (1) in an electrically conductive manner and
- a housing which encloses the conductors (5) and, in a first mounting part (2), accommodates the first contact element (1) and, in a second mounting part (2), accommodates the second contact element (1), wherein the housing is formed in such a way that this permits a relative movement between the first mounting part (2) and the second mounting part (2), **characterised in that** a housing section (4) connecting the mounting parts (2) is formed of an elastomer and is flexible..

2. Connection device according to claim 1, **characterised in that** the mounting parts (2) are rigid in design.

3. Connection device according to one of the preceding claims, **characterised in that** the mounting parts (2) possess connecting means for fixing the connection device to the components.

4. Connection device according to one of the preceding claims, **characterised in that** the conductors (5) run in a curved form within the housing in an unloaded initial state of the housing.

5. Connection device according to one of the preceding claims, **characterised in that** the conductor (5) is designed in the form of a ground strap.

6. Connection device according to one of the preceding claims, **characterised in that** the housing forms a shield.

7. Connection device according to claim 6, **characterised in that** a material of the housing contains metallic particles.

8. Connection device according to one of the preceding claims, **characterised in that** the elastomer contains metallic particles.

9. Connection device according to one of the preceding claims, **characterised in that** the contact elements (1) are designed in the form of plug contact elements.

10. Electrical drive unit for a motor vehicle with at least two components connected in an electrically conductive manner by means of a connection device according to one of the preceding claims.

11. Electrical drive unit according to claim 10, **characterised in that** a power electronics system is connected with an electrical drive motor operated with high voltage by means of the connection device.

## Revendications

1. Dispositif de connexion pour la connexion conductrice de l'électricité de composants électriques, comprenant
- un premier élément de contact (1), qui est prévu pour un contact avec un élément de contact antagoniste correspondant (7) d'un premier des composants,
- un second élément de contact (1), qui est prévu pour un contact avec un élément de contact antagoniste correspondant (7) d'un second des composants,
- un conducteur flexible (5) qui connecte le premier élément de contact (1) avec le second élément de contact (1) de manière à conduire l'électricité, et
- un boîtier, qui entoure le conducteur (5) et qui reçoit le premier élément de contact (1) dans une première partie de réception (2) et qui reçoit le second élément de contact (1) dans une seconde partie de réception (2), dans lequel le boîtier est réalisé de telle manière que celui-ci permet un mouvement relatif entre la première partie de réception (2) et la seconde partie de réception (2), **caractérisé en ce qu'**une partie de boîtier (4) qui connecte les parties de réception (2) est réalisée en élastomère et est flexible.

2. Dispositif de connexion selon la revendication 1, **caractérisé en ce que** les parties de réception (2) sont réalisées rigides.

3. Dispositif de connexion selon l'une des revendications précédentes, **caractérisé en ce que** les parties de réception (2) comprennent des moyens de liaison pour la fixation du dispositif de connexion sur les composants.

4. Dispositif de connexion selon l'une des revendications précédentes, **caractérisé en ce que** le conducteur (5) s'étend, dans un état de départ non chargé du boîtier, en formant un arc dans le boîtier.

5. Dispositif de connexion selon l'une des revendications précédentes, **caractérisé en ce que** le conducteur (5) est réalisé sous la forme d'un ruban de masse.

6. Dispositif de connexion selon l'une des revendications précédentes, **caractérisé en ce que** le boîtier forme un blindage.

7. Dispositif de connexion selon la revendication 6, **caractérisé en ce qu'**un matériau du boîtier inclut des particules métalliques.

8. Dispositif de connexion selon l'une des revendications précédentes, **caractérisé en ce que** l'élastomère inclut des particules métalliques.

9. Dispositif de connexion selon l'une des revendications précédentes, **caractérisé en ce que** les éléments de contact (1) sont réalisés sous la forme d'éléments de contact à enfichage.

10. Unité d'entraînement électrique pour un véhicule automobile comprenant au moins deux composants, connectés de manière à conduire l'électricité au moyen d'un dispositif de connexion selon l'une des revendications précédentes.

11. Unité d'entraînement électrique selon la revendication 10, **caractérisée en ce qu'**une électronique de puissance est connectée au moyen du dispositif de connexion avec un moteur d'entraînement électrique fonctionnant sous haute tension.
